# EUROPÄISCHE PATENTANMELDUNG

(11) **EP 3 048 495 A1**
(43) Veröffentlichungstag der Anmeldung: **27.07.2016**
(21) Anmeldenummer: 15151805.7
(22) Anmeldetag: 20.01.2015
(51) Int. Cl.: G05B 19/04, G06F 9/44

(54) **Verfahren zum webbasierten Zugriff auf ein Automatisierungsgerät, Computerprogramm zur Ausführung des Verfahrens und System mit zumindest zwei Computern, auf denen jeweils ein solches Computerprogramm ausgeführt wird**

(71) Anmelder: Siemens Aktiengesellschaft, 80333 München (DE)
(72) Erfinder: Henrich, Andreas, 68766 Hockenheim (DE); Meilland, Gerald, 67630 Lauterbourg (FR)

(57) **Zusammenfassung**

Die Erfindung ist ein Verfahren zum Zugriff auf ein Automatisierungsgerät (14) mittels zumindest eines Webservers (26), zumindest eines Webbrowsers (28) und einer Webanwendung (30), wobei der Webserver (26) mehrere Fenster (34-38) der Webanwendung (30) verwaltet, sowie ein Computerprogramm zur Ausführung des Verfahrens und ein System mit zumindest zwei Computern, auf denen jeweils ein solches Computerprogramm ausgeführt wird.

## Beschreibung

Die Erfindung betrifft ein Verfahren zum webbasierten Zugriff auf ein Automatisierungsgerät, also ein Verfahren, bei dem der Zugriff auf das Automatisierungsgerät erfolgt, indem mittels Telekommunikationsnetzwerken, insbesondere dem Internet, Daten vom und/oder zum Automatisierungsgerät übertragen werden. Im Rahmen eines solchen Zugriffs sind zum Beispiel eine Konfiguration oder Parametrierung sowie eine Programmierung des Automatisierungsgeräts möglich. Des Weiteren wird als Zugriff auf das Automatisierungsgerät auch eine Bedienung des Automatisierungsgeräts verstanden, etwa eine Bedienung des Automatisierungsgeräts während dieses einen technischen Prozess, zum Beispiel einen Produktionsprozess, steuert und/oder überwacht.

Des Weiteren betrifft die Erfindung ein Computerprogramm zur Ausführung des Verfahrens, nämlich jeweils ein Computerprogramm, das bei dem webbasierten Zugriff auf Seiten des sogenannten Servers sowie auf Seiten des sogenannten Clients ausgeführt wird. Schließlich betrifft die Erfindung auch ein System mit zumindest zwei als Client und Server fungierenden Computern, auf denen jeweils ein solches Computerprogramm ausgeführt wird.

Ein webbasierter Zugriff auf ein Automatisierungsgerät ist grundsätzlich bereits bekannt. Ein Arbeiten auf mehreren Bildschirmen, wie dies von moderner Anwendungssoftware üblicherweise unterstützt wird, ist im Rahmen eines webbasierten Zugriffs auf ein Automatisierungsgerät bisher nicht möglich.

Dies wird als nachteilig angesehen, denn bei moderner Anwendungssoftware können Benutzer zum Beispiel visuelle Teile der Anwendung aufgrund mehrerer von der Anwendung unterstützter Fenster auf mehrere Bildschirme verteilen. Beispielsweise kann ein Bildschirm ein Fenster mit einem jeweils bearbeiteten Dokument anzeigen, während auf einem anderen Bildschirm in jeweils einem Fenster eine Werkzeugpalette bzw. Statusinformationen angezeigt werden.

Webbasierte Anwendungen unterstützen eine solche Funktionalität nicht. Fenster können zwar mit HTML und CSS abgebildet werden. Diese können aber immer nur in einem Browserfenster dargestellt werden. Auch künftige Webstandards sehen keine Unterstützung für mehrere Bildschirme vor.

Eine Aufgabe der hier beschriebenen Neuerung besteht entsprechend darin, ein in Bezug auf die von moderner Anwendungssoftware bekannten Möglichkeiten zum Arbeiten mit mehreren Fenstern/auf mehreren Bildschirmen optimiertes Verfahren zum webbasierten Zugriff auf ein Automatisierungsgerät anzugeben.

Diese Aufgabe wird mittels eines Verfahrens mit den Merkmalen des Anspruchs 1 gelöst. Danach ist bei einem Verfahren zum webbasierten Zugriff auf ein Automatisierungsgerät mittels zumindest eines Webservers, zumindest eines Webbrowsers und einer Webanwendung vorgesehen, dass der Webserver mehrere Fenster der Webanwendung verwaltet.

Die Erfindung ist in Software implementiert. Insoweit ist die Erfindung ebenso ein Computerprogramm mit Programmcodemitteln, um alle Schritte des Verfahrens durchzuführen, wenn das Computerprogramm auf einem Computer mit einem Webserver ausgeführt wird, insbesondere wenn das Computerprogramm als Webserver oder als Teilfunktionalität eines selbst in Form eines Computerprogramms implementierten Webservers fungiert. Zur Unterscheidung wird ein solches Computerprogramm im Folgenden als Server-Computerprogramm bezeichnet, denn die Erfindung ist auch ein Computerprogramm mit Programmcodemitteln, um alle Schritte des Verfahrens durchzuführen, wenn das Computerprogramm auf einem Computer mit einem Webbrowser und einer Webanwendung ausgeführt wird. Ein solches Computerprogramm wird zur Unterscheidung von dem Server-Computerprogramm als Client-Computerprogramm bezeichnet.

Des Weiteren ist die Erfindung auch ein System mit einem Computer, auf dem ein Webserver ausgeführt wird, sowie zumindest einem Computer, auf dem ein Webbrowser und eine Webanwendung ausgeführt werden, wobei auf dem Computer mit dem Webserver ein Server-Computerprogramm ausgeführt wird und wobei auf dem Computer mit dem Webbrowser und der Webanwendung ein Client-Computerprogramm ausgeführt wird.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: ein Automatisierungssystem mit einem zum entfernten Zugriff auf ein davon umfasstes Automatisierungsgerät vorgesehenen Programmiergerät und
- FIG 2: einen Webserver als Schnittstelle zwischen dem Automatisierungsgerät und dem Programmiergerät sowie eine auf dem Programmiergerät ablaufende Webanwendung mit mehreren Anwendungsfenstern sowie einem auf dem Webserver ablaufenden Fenstermanager zur Verwaltung der Anwendungsfenster.

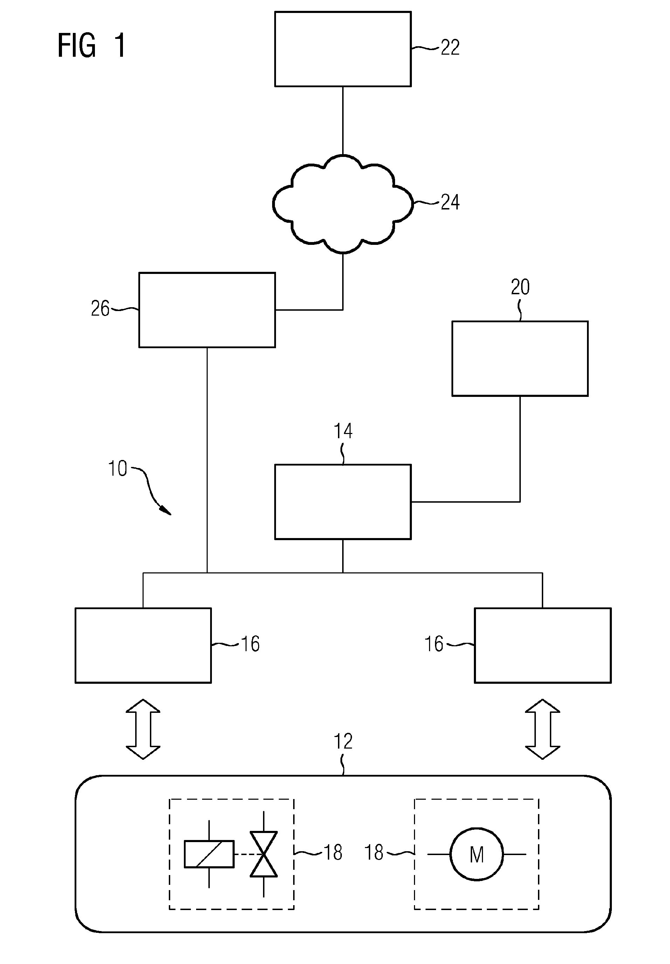

Die Darstellung in FIG 1 zeigt in schematisch vereinfachter Form ein Automatisierungssystem 10 zur Steuerung und/oder Überwachung eines nicht näher dargestellten technischen Prozesses 12. Das Automatisierungssystem 10 umfasst zumindest ein Automatisierungsgerät 14, zum Beispiel ein Automatisierungsgerät 14 in Form einer speicherprogrammierbaren Steuerung oder dergleichen, sowie zum Beispiel mehrere sogenannte dezentrale Feldgeräte 16.

Das Automatisierungssystem 10 interagiert mittels der davon umfassten Komponenten 14, 16 in grundsätzlich an sich bekannter Art und Weise mit dem jeweiligen technischen Prozess 12, indem Zustände des technischen Prozesses 12 zum Beispiel in Form von Messwerten und dergleichen aufgenommen werden und entsprechend einer in Form eines oder mehrerer Steuerungsprogramme implementierten Automatisierungslösung der technische Prozess 12 beeinflusst wird, zum Beispiel indem davon umfassten Aktoren 18 angesteuert, also zum Beispiel aktiviert oder deaktiviert werden.

Eine Bedienung des Automatisierungsgeräts 14 kann zum Beispiel mittels eines Bediengeräts 20 (in der Fachterminologie oftmals auch als Bedien- und Beobachtungsgerät/BuB-Gerät bezeichnet) erfolgen. Dieses ist dafür temporär oder dauerhaft an das Automatisierungsgerät 14 angeschlossen oder in sonst geeigneter Art und Weise kommunikativ mit dem Automatisierungsgerät 14 verbunden, zum Beispiel in Form eines Anschlusses an ein die Komponenten 14, 16 des Automatisierungssystems 10 verbindendes Bussystem, insbesondere einen Feldbus oder dergleichen. Eine Bedienung des Automatisierungsgeräts 14 mittels eines solchen Bediengeräts 20, bei dem es sich zum Beispiel auch um ein Programmiergerät handeln kann, ist allgemein bekannt, erfordert aber, dass sich der jeweilige Bediener zum Ort des Automatisierungssystems 10 begibt, um die entsprechenden Bedienhandlungen an dem Bediengerät 20 vornehmen zu können.

Zusätzliche Flexibilität, aber auch ein verbesserter Komfort für den Bediener ergeben sich, wenn die Bedienung des Automatisierungsgeräts 14 oder mehrerer Automatisierungsgeräte 14 oder anderer Komponenten 14, 16 des Automatisierungssystems 10 oder anderer Automatisierungssysteme von grundsätzlich jedem beliebigen Ort erfolgen kann. Zu diesem Zweck ist bereits in der Vergangenheit ein webbasierter Zugriff auf Automatisierungsgeräte 14 der hier in Rede stehenden Art vorgeschlagen worden. Ein solcher webbasierter Zugriff erfolgt mittels eines Geräts in Form von oder nach Art eines Computers, das hier auch als Bediengerät bezeichnet werden könnte, zur Unterscheidung von dem Bediengerät 20 aber im Folgenden - ohne Verzicht auf eine weitergehende Allgemeingültigkeit - als Programmiergerät 22 bezeichnet wird.

Das Programmiergerät 22 kann sich an einem grundsätzlich beliebigen Ort befinden und hat Zugang zum Internet 24. Im Internet 24 oder mittels des Internets 24 ist für das Programmiergerät 22 ein Webserver 26 erreichbar, der seinerseits direkt oder indirekt, zum Beispiel ebenfalls über das Internet 24, kommunikativ mit dem Automatisierungssystem 10 verbunden ist, zum Beispiel im Wege eines Anschlusses an dessen Bussystem.

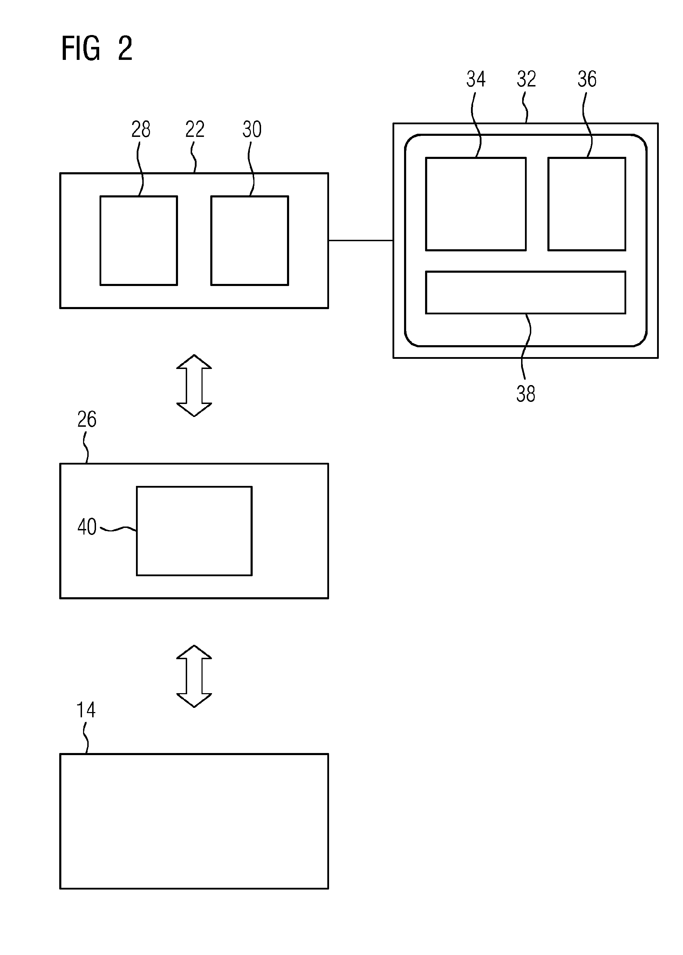

Die Darstellung in FIG 2 wiederholt - in nochmals weiter vereinfachter Form - einzelne Details der Darstellung in FIG 1, nämlich das Programmiergerät 22, den Webserver 26 sowie ein Automatisierungsgerät 14. Das Programmiergerät 22 fungiert in Bezug auf den als Server fungierenden Webserver 26 als Client.

In einen Speicher des Programmiergeräts 22 sind in an sich bekannter Art und Weise Computerprogramme geladen. Bei den Computerprogrammen handelt es sich um ein erstes Computerprogramm in Form eines sogenannten Webbrowsers 28 sowie ein zweites Computerprogramm in Form einer sogenannten Webanwendung 30. Bei dem als Schnittstelle zwischen dem Programmiergerät 22 und dem Automatisierungsgerät 14 fungierenden Webserver 26 handelt es sich in an sich bekannter Art und Weise ebenfalls um einen Computer und ein auf dem Computer ablaufendes Computerprogramm. Die Schnittstellenfunktion des Webservers 26 besteht damit zwischen der auf dem Programmiergerät 22 ablaufenden Webanwendung 30, die ihrerseits den WebBrowser 28 verwendet, und dem Automatisierungsgerät 14.

Zur Darstellung einer Benutzeroberfläche für die in Bezug auf das Automatisierungsgerät 14 vorzunehmenden/vorgenommenen Bedienhandlungen sowie der Ergebnisse solcher Bedienhandlungen ist auf Seiten des Programmiergeräts 22 in grundsätzlich an sich bekannter Art und Weise zumindest ein Bildschirm 32 vorgesehen. Mittels des Bildschirms 32 erfolgt eine Darstellung zumindest eines Fensters 34 und gemäß der hier vorgeschlagenen Neuerung optional eine Darstellung mehrerer Fenster 34, 36, 38, wobei die Anzahl der Fenster grundsätzlich nicht begrenzt ist und insofern zum Beispiel ein, zwei, drei, vier usw. Fenster 34-38 darstellbar sind.

Zur Verwaltung einer Mehrzahl von Fenstern 34-38 für die Webanwendung 30 auf Seiten des Programmiergeräts 22 ist ein Fenstermanager 40 vorgesehen. Bei diesem handelt es sich um ein Computerprogramm oder eine Software-Funktionalität, das bzw. die auf dem Webserver 26 ausgeführt wird. Der Fenstermanager 40 verteilt die Sichten auf die Anwendungslogik auf die verschiedenen Fenster 34-38. Bei diesen handelt es sich um einzelne Fenster 34-38 des Webbrowsers 28, also um Browserfenster 34-38.

Der Vorteil des hier vorgestellten Ansatzes besteht darin, dass die Abbildung von Fenstern 34-38 der Webanwendung 30 per HTML/CSS und mithilfe des serverseitigen Fenstermanagers 40 realisiert werden kann und im Ergebnis eine vollwertige Desktopanwendung mit mehreren Fenstern 34-38 möglich ist. Diese ist zudem auf nahezu allen Plattformen ablauffähig. Die Darstellung der Fenster 34-38 ist nicht auf einen einzelnen Bildschirm 32 des Programmiergeräts 22 beschränkt. So wie dies bei moderner Anwendungssoftware ebenfalls möglich ist, können an das Programmiergerät 22 mehrere Bildschirme 32 angeschlossen sein und der Benutzer erhält die Möglichkeit, die einzelnen Fenster 34-38 auf unterschiedliche Bildschirme 32 zu verteilen. Dazu kann die Webanwendung 30 zum Beispiel eine "Verschiebe auf Bildschirm"-Funktion anbieten. Der Benutzer kann ein Anwendungsfenster 34-38 so direkt auf den gewünschten Bildschirm 32 platzieren.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Zugriff auf ein Automatisierungsgerät (14) mittels zumindest eines Webservers (26), zumindest eines Webbrowsers (28) und einer Webanwendung (30),
wobei der Webserver (26) mehrere Fenster (34-38) der Webanwendung (30) verwaltet.

2. Computerprogramm (40) mit Programmcodemitteln, um alle Schritte des Anspruchs 1 durchzuführen, wenn das Computerprogramm (40) auf einem Computer mit einem Webserver (26) ausgeführt wird.

3. Computerprogramm mit Programmcodemitteln, um alle Schritte des Anspruchs 1 durchzuführen, wenn das Computerprogramm auf einem Computer mit einem Webbrowser (28) und einer Webanwendung (30) ausgeführt wird.

4. System mit einem Computer, auf dem ein Webserver (26) ausgeführt wird, sowie zumindest einem Computer, auf dem ein Webbrowser (28) und eine Webanwendung (30) ausgeführt werden, wobei auf dem Computer mit dem Webserver (26) ein Computerprogramm gemäß Anspruch 2 ausgeführt wird und wobei auf dem Computer mit dem Webbrowser (28) und der Webanwendung (30) ein Computerprogramm gemäß Anspruch 3 ausgeführt wird.
